# EUROPÄISCHE PATENTANMELDUNG

(11) **EP 4 726 971 A1**
(43) Veröffentlichungstag der Anmeldung: **15.04.2026**
(21) Anmeldenummer: 25193805.6
(22) Anmeldetag: 04.08.2025
(51) Int. Cl.: H02K 1/14, H02K 15/028, H02K 15/12

(54) **STATOR FÜR EINE ELEKTRISCHE MASCHINE**

(30) Priorität: 11.10.2024 DE 102024209920
(71) Anmelder: Baumüller Nürnberg GmbH, 90482 Nürnberg (DE)
(72) Erfinder: SCHARF, Frank, 91242 Ottensoos (DE); SWARTE, Matthias, 91227 Leinburg (DE)
(74) Vertreter: FDST Patentanwälte

(57) **Zusammenfassung**

Die Erfindung betrifft einen Stator (26) für eine elektrische Maschine (4), mit mehreren Einzelzähnen (30), die jeweils einen radial innenliegenden Zahnkopf (34) und einen radial außenliegenden Zahnfuß (36) aufweisen, zwischen denen ein Zahnkörper (38) angeordnet ist. Die Zahnfüße (36) sind bezüglich einer radialen Symmetrieachse (48) des Zahnkörpers (38) in tangentialer Richtung (42) einseitig verkürzt, wobei die verkürzten Enden (50) der Zahnfüße (36) von jeweils in tangentialer Richtung (42) benachbarter Einzelzähnen (30) unter Ausbildung eines Spalts (54) aufeinander zu gerichtet sind. Ferner betrifft die Erfindung eine elektrische Maschine (4) sowie ein Verfahren (60) zur Herstellung einer elektrischen Maschine (4).

## Beschreibung

Die Erfindung betrifft einen Stator für eine elektrische Maschine, der mehrere Einzelzähnen umfasst. Die Einzelzähne weisen jeweils einen radial innenliegenden Zahnkopf und einen radial außenliegenden Zahnfuß auf. Die Erfindung betrifft ferner eine elektrische Maschine und ein Verfahren zur Herstellung einer elektrischen Maschine.

Industrieanlagen weisen üblicherweise Aktoren auf, die mittels eines Elektromotors angetrieben sind. So werden beispielsweise bei der Kunststoffverarbeitung und der Kunststoffherstellung etwaige Förderschnecken oder Pressstempel üblicherweise mittels eines Elektromotors angetrieben. Hierbei wird beispielsweise ein Stempel oder eine Schnecke eines Kunststoffspritzgeräts mittels des Elektromotors bewegt. Auch ist es möglich, ein Förderband, eine Hebeeinrichtung und/oder Werkzeuge mittels eines derartigen Elektromotors zu betreiben. Eine weitere Verwendung von Elektromotoren findet sich zum Beispiel im maritimen Bereich, wobei der Elektromotor beispielsweise in einer Gondel an einem Rumpf eines Schiffs angebracht ist.

Die Elektromotoren sind üblicherweise bürstenlos ausgestaltet und weisen einen permanenterregten Rotor mit einer Anzahl an Permanentmagneten auf, die an einem Rotorkörper befestigt sind. Der Stator hingegen weist mehrere Elektromagneten auf, die üblicherweise zu mehreren elektrischen Phasen verschaltet sind, beispielsweise 3 oder 6. Die Phasen wiederum sind meist in einer Dreiecks- oder Sternschaltung verschaltet und werden mittels eines Umrichters bestromt.

Jeder Elektromagnet weist üblicherweise eine elektrische Spule auf, die aus einem Draht erstellt und auf einen Zahn eines Blechpakets des Stators gewickelt ist. Zur Formung des Magnetfelds sind dabei die dem Rotor zugewandten Enden jedes Zahns, das auch als Zahnkopf bezeichnet wird, verbreitet ausgeführt, wobei zwischen jeweils benachbarten Zahnköpfen eine Nutöffnung gebildet ist.

In einer Variante ist das Blechpaket durchgehend ausgestaltet, sodass jede Blechlage des Blechpakets allen Zähnen zugeordnet ist. Somit weisen das Blechpaket und daher auch der Stator eine vergleichsweise hohe Stabilität auf. Zum Bewickeln der Zähne mit dem Draht ist es jedoch erforderlich, diesen durch die Nutöffnung zu führen, wofür üblicherweise eine Nadel verwendet wird, für die ausreichend Montageraum vorgehalten werden muss. Infolgedessen ist es nicht möglich, die zwischen den einzelnen Zähnen gebildeten Bereiche vollständig mit den einzelnen elektrischen Spulen zu befüllen. Infolgedessen ist das mittels der einzelnen Elektromagneten bereitgestellte elektrische Magnetfeld nicht maximal. Eine Alternative sieht daher vor, Einzelzähne zu verwenden, die nach dem Bewickeln mit dem Draht geeignet aneinandergefügt werden, sodass der hohlzylindrische Stator gebildet ist. Da hierbei ein Montagebereich im Wesentlichen nicht begrenzt ist, ist es möglich, auf jeden der Einzelzähne eine vergleichsweise große Anzahl an Windungen der jeweiligen elektrischen Spulen aufzubringen. Hierbei sind die Einzelzähne üblicherweise zueinander baugleich, weswegen Gleichteile verwendet werden können.

Der Erfindung liegt die Aufgabe zugrunde, einen besonders geeigneten Stator sowie eine besonders geeignete elektrische Maschine als ein besonders geeignetes Verfahren zur Herstellung einer elektrischen Maschine anzugeben, wobei vorteilhafterweise ein Wirkungsgrad verbessert ist.

Hinsichtlich des Stators wird diese Aufgabe durch die Merkmale des Anspruchs 1 hinsichtlich der elektrischen Maschine durch die Merkmale des Anspruchs 8 und hinsichtlich des Verfahrens durch die Merkmale des Anspruchs 10 erfindungsgemäß gelöst. Vorteilhafte Weiterbildungen und Ausgestaltungen sind Gegenstand der jeweiligen Unteransprüche.

Der Stator ist für eine elektrische Maschine geeignet. Insbesondere bildet der Stator im Montagezustand einen Bestandteil der elektrischen Maschine, und der Stator ist hierfür geeignet, insbesondere vorgesehen und eingerichtet. Beispielsweise ist die elektrische Maschine bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 0,1 kW und 30 kW, zwischen 0,2 kW und 25 kW oder zwischen 0,3 kW und 19 kW und insbesondere gleich 10 kW auf, wobei jeweils zum Beispiel eine Abweichung von 2 kW, 1 kW, 0,5 kW oder 0 kW vorhanden ist.

Geeigneterweise weist die elektrische Maschine eine Drehzahl, beispielsweise eine Nenndrehzahl oder maximale Drehzahl, zwischen 10 1/min. und 800 1/min., zwischen 30 1/min. und 600 1/min., zwischen 50 1/min. und 500 1/min. oder zwischen 100 1/min. und 400 1/min. auf, wobei insbesondere eine Abweichung von 100 1/min., 50 1/min., 20 1/min. oder 0 1/min. vorhanden ist. Alternativ weist die elektrische Maschine zweckmäßigerweise eine Drehzahl, beispielsweise eine Nenndrehzahl oder maximale Drehzahl, zwischen 10 1/min. und 5.000 1/min., zwischen 100 1/min. und 3.000 1/min., zwischen 1.000 1/min. und 3.000 1/min. oder zwischen 2.000 1/min. und 3.000 1/min. auf, wobei insbesondere eine Abweichung von 500 1/min., 200 1/min., 100 1/min. oder 0 1/min. vorhanden ist.

Besonders bevorzugt weist die elektrische Maschine ein Drehmoment, beispielsweise ein Maximales- und/oder Nenndrehmoment zwischen 300 Nm und 200.000 Nm, zwischen 500 Nm und 175.000 Nm, zwischen 500 Nm und 150.000 Nm, zwischen 500 Nm und 100.000 Nm oder zwischen 500 Nm und 80.000 Nm auf, wobei insbesondere jeweils eine Abweichung von 100 Nm, 50 Nm, 10 Nm oder 0 Nm vorhanden ist.

Vorzugsweise dient die elektrische Maschine dem Antrieb eines Aktors einer Industrieanlage, wie eines Förderbands, eines Roboters oder eines Bauteils zur Bearbeitung oder Herstellung eines Bauteils, wie eine Presse oder eine Förderraupe. Beispielsweise ist die elektrische Maschine ein Bestandteil einer Servopresse. Mit anderen Worten wird mittels der elektrischen Maschine insbesondere eine Presse angetrieben. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben. Zum Beispiel ist die elektrische Maschine ein Bestandteil einer Abfüllanlage, einer Spritzgussmaschine oder Textilmaschine.

Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. In einer weiteren Alternative ist die elektrische Maschine ein Bestandteil eines Fahrrads, wie eines Pedelecs, und dient dem Vortrieb des Fahrrads. Beispielsweise ist die elektrische Maschine ein Bestandteil eines Nutz-/Kraftfahrzeugs und insbesondere eines Antriebs des Nutz-/Kraftfahrzeugs. Besonders bevorzugt ist die elektrische Maschine ein Bestandteil eines Hauptantriebs des Nutz-/Kraftfahrzeugs und dient somit dem Vortrieb des Nutz-/Kraftfahrzeugs. Hierfür ist im Montagezustand die elektrische Maschine beispielsweise mit einem Rad des Nutz-/Kraftfahrzeugs gekoppelt, beispielsweise direkt oder mittelbar über ein Getriebe. Mit anderen Worten bildet die elektrische Maschine eine Hauptmaschine des Nutz-/Kraftfahrzeugs oder zumindest eine der Hauptmaschine des Nutz-/Kraftfahrzeugs, sofern das Nutz-/Kraftfahrzeug mehrere Hauptmaschinen aufweist.

Der Stator ist zweckmäßigerweise hohlzylindrisch ausgestaltet und erstreckt sich entlang einer Maschinenachse. Mit anderen Worten ist der Stator um die Maschinenachse herum angeordnet. Dabei ist mittels der Maschinenachse insbesondere eine Axialrichtung definiert, die hierzu parallel ist. Auch ist eine Radialrichtung und Tangentialrichtung mittels der Maschinenachse definiert. Vorzugsweise ist hierbei der Stator drehsymmetrisch bezüglich der Maschinenachse ausgestaltet.

Im Montagezustand ist mittels des Stators zweckmäßigerweise ein Rotor der elektrischen Maschine umgeben, der drehbar um die Maschinenachse gelagert ist, die somit die Rotationsachse der elektrischen Maschine darstellt. Insbesondere ist somit die elektrische Maschine als Innenläufer ausgestaltet. Geeigneterweise ist der Rotor drehsymmetrisch bezüglich der Maschinenachse ausgestaltet. Insbesondere weist die elektrische Maschine eine Welle auf, die beispielsweise aus einem Stahl erstellt ist. Die Welle ist zweckmäßigerweise konzentrisch zur Maschinenachse angeordnet, und der Rotor ist geeigneterweise auf die Welle aufgesetzt. Hierfür weist der Rotor zweckmäßigerweise eine geeignete Aussparung auf, sodass der Rotor im Wesentlichen hohlzylindrisch ausgestaltet ist. Vorzugsweise ist der Rotor drehfest mit der Welle verbunden, beispielsweise mittels einer Feder-Nut-Verbindung.

Der Stator weist mehrere Einzelzähne auf. Insbesondere ist der Stator mittels der Einzelzähne gebildet, die zu der hohlzylindrischen Form zusammengesetzt sind. Somit sind die Einzelzähne in Tangentialrichtung (tangentialer Richtung) zueinander benachbart angeordnet. Jeder Einzelzahn weist einen radial innenliegenden Zahnkopf und einen radial außen liegenden Zahnfuß auf. Mit anderen Worten ist jeder Zahnfuß bezüglich des jeweiligen Zahnfußes in Radialrichtung, die auch als radiale Richtung bezeichnet ist, nach außen versetzt und weist somit einen größeren Abstand zur Montageachse auf. Zwischen jedem Zahnkopf und dem jeweiligen Zahnfuß ist jeweils ein Zahnkörper angeordnet. Jeder Zahnkörper ist insbesondere radial angeordnet, also entlang einer jeweiligen Radialrichtung. Zwischen den Zahnköpfen von in Tangentialrichtung benachbarten Einzelzähnen ist vorzugsweise jeweils eine Nutöffnungen gebildet, und zwischen in Tangentialrichtung benachbarten Zahnkörper ist eine Nut gebildet. Dabei sind insbesondere die Nuten und die Nutöffnungen zueinander jeweils gleich, und jede Nutöffnungen mündet insbesondere in einer der Nuten.

Mittels jedes Zahnkopfs, des zugeordneten Zahnfußes und des zugeordneten Zahnkörpers ist dabei zweckmäßigerweise jeweils ein Rumpfzahn gebildet. Vorzugsweise ist dabei der Rumpfzahn aus einem ferromagnetischen Material erstellt. Beispielsweise ist hierbei jeder Rumpfzahn gesintert. Besonders bevorzugt jedoch sind die Rumpfzähne jeweils mittels eines Blechpakets bereitgestellt, was eine Robustheit erhöht und Herstellungskosten reduziert. Folglich weist der Stator genauso viele einzelne Blechpakete wie Einzelzähne auf.

Zweckmäßigerweise umfasst jeder Einzelzahn eine elektrische Spule, die insbesondere aus einem Draht gewickelt ist, insbesondere einem Lackdraht, sodass ein elektrischer Kurzschluss vermieden ist. Vorzugsweise wird hierfür ein Kupferlackdraht verwendet. Dabei ist jede elektrische Spule insbesondere auf den jeweiligen Zahnkörper gewickelt und befindet sich somit in radialer Richtung (Radialrichtung) zwischen dem jeweiligen Zahnkörper und Zahnfuß. Vorzugsweise weist somit jeder Einzelzahn den jeweiligen Rumpfzahn und die jeweilige elektrische Spule auf und ist geeigneterweise damit gebildet.

Der Zahnkörper weist eine Symmetrieachse auf, die radial verläuft. Dabei ist der Zahnkörper bezüglich der Symmetrieachse symmetrisch ausgestaltet. Somit ist jedem Einzelzahn eine Symmetrieachse zugeordnet. Geeigneterweise ist auch der zugordnete Zahnkopf symmetrisch bezüglich der jeweiligen Symmetrieachse. Die Zahnfüße hingegen sind nicht symmetrisch bezüglich der jeweiligen Symmetrieachse und sind in tangentialer Richtung einseitig verkürzt. Folglich weisen die gegenüberliegenden Enden jedes Zahnfußes in Tangentialrichtung (tangentialer Richtung) zu der jeweiligen Symmetrieachse unterschiedliche Abstände auf. Somit sind die Einzelzähne selbst nicht vollsymmetrisch ausgebildet.

Die verkürzten Enden der Zahnfüße von jeweils in tangentialer Richtung benachbarten Einzelzähne sind dabei aufeinander zugerichtet, sodass ein Spalt gebildet ist. Somit sind jedem der Spalte jeweils zwei der Zahnfüße zugeordnet, und zwischen in Tangentialrichtung jeweils benachbarten Spalten sind zwei der Zahnfüße angeordnet. Jeder der Spalte verläuft bevorzugt in Axialrichtung durch den vollständigen Stator hindurch.

Aufgrund einer derartigen Ausgestaltung ist es möglich, die Nuten vollständig oder zumindest in vergrößertem Maße mit den jeweiligen elektrischen Spulen zu befüllen, was das Erstellen der Magnetfelder damit verbessert. So sind keine oder lediglich geringe Räume bei dem Stator vorhanden, die nicht zur Bereitstellung des Magnetfelds genutzt werden, weswegen ein Wirkungsgrad verbessert ist. Aufgrund der Spalte sind (magnetische) Flussbarrieren oder (magnetische) Flusssperren gebildet, weswegen das Ausbilden von Oberschwingungen in dem mittels der elektrischen Spule geführten elektrischen Stroms vermieden oder zumindest reduziert ist. Mit anderen Worten werden die Oberschwingungen gedämpft, die nicht zur Bereitstellung des gewünschten Magnetfelds beitragen. Dabei wird jedoch die gleiche Leistung für die Bestromung der elektrischen Spulen verwendet, weswegen ein Wirkungsgrad erhöht ist.

Zweckmäßigerweise ist die Anzahl der Einzelzähne ein Vielfaches von 3, vorzugsweise zwischen 8 und 16 und zweckmäßigerweise gleich 12. Beispielsweise ist die elektrische Maschine flüssigkeitsgekühlt, wobei zum Beispiel durch die Einzelzähne eine Kühlflüssigkeit geführt wird die hierfür geeignete Leitungen aufweisen. Besonders bevorzugt jedoch ist die elektrische Maschine, und somit der Stator, luftgekühlt ausgebildet, und der Stator weist insbesondere keine weiteren Öffnungen oder dergleichen zum Führen einer Kühlflüssigkeit auf. Somit ist vergleichsweise viel ferromagnetisches Material oder dergleichen vorhanden, weswegen ein Wirkungsgrad weiter verbessert ist.

Beispielsweise sind die unverkürzten Enden der Zahnfüße der jeweils in tangentialer Richtung benachbarten Einzelzähne zueinander beabstandet, sodass hier jeweils ein weiterer Spalt gebildet ist. Besonders bevorzugt jedoch liegen diese Enden direkt aneinander an. Somit ist eine mechanische Integrität erhöht und eine Montage erleichtert. Die jeweils zwischen jedem zweiten der in Tangentialrichtung benachbarten Einzelzähne gebildeten Spalten sind dabei bereits ausreichend, um etwaige Oberschwingungen ausreichend zu dämpfen/reduzieren.

Beispielsweise sind die Einzelzähne zueinander unterschiedlich. Geeigneterweise sind die jeweils in Tangentialrichtung zweiten Einzelzähne zueinander baugleich, sodass der Stator zwei unterschiedliche Arten von Einzelzähnen aufweist. Somit ist es möglich, eine Anzahl an zum Herstellen erforderlichen Werkzeugen zu reduzieren. Auch ist eine Lagerhaltung vereinfacht.

Besonders bevorzugt jedoch sind sämtliche Einzelzähne zueinander baugleich, zumindest der jeweilige etwaige Rumpfzahn. Damit hierbei die verkürzten Enden aufeinander zu gerichtet sind, sind die direkt zueinander benachbarten Einzelzähne zweckmäßigerweise um 180° gedreht angeordnet. Als Drehachse wird dabei die jeweilige Symmetrieachse verwendet. Infolgedessen sind die zur Herstellung benötigten Werkzeuge weiter reduziert und eine Lagerhaltung ist weiter vereinfacht. Auch sind auf diese Weise sämtliche Spalte zueinander gleichartig.

Beispielsweise ist jeder Spalt in radialer Richtung durchgehend ausgebildet. Mit anderen Worten sind die jedem Spalt jeweils zugeordneten Einzelzähne mittels des Spalts zueinander getrennt, sodass dort kein mechanischer Kontakt zwischen diesen vorhanden ist. Mit anderen Worten sind die Einzelzähne, deren verkürzten Enden aufeinander zu gerichtet sind, vollständig zueinander getrennt. Somit ist eine vergleichsweise effektive Flussbarriere gebildet. Alternativ hierzu liegen diese dennoch aneinander an, wobei jedoch aufgrund des verkürzten Endes und des Spalts im Vergleich zu dem anderen Ende der Bereich der Anlage verringert ist. Mit anderen Worten ist der Spalt in Radialrichtung nicht durchgehend ausgebildet. Hierbei ist der Spalt beispielsweise radial innen oder radial außen geöffnet. Somit ist jeder Spalt insbesondere als radial geöffnete Kerbe des Stators ausgebildet. Alternativ hierzu ist der Spalt sowohl an der radial äußeren als auch an der radial inneren Seite geschlossen. Zumindest jedoch ist aufgrund des Spalts weniger Material als bei den unverkürzten Enden vorhanden.

Beispielsweise sind die verkürzten Enden glatt ausgestaltet. Besonders bevorzugt jedoch sind diese gezahnt ausgebildet. Somit weist das verkürzte Ende mehrere Zacken oder kammartige Ausprägungen auf. Beispielsweise sind dabei die verkürzten Enden zueinander vollständig beabstandet, oder diese liegen insbesondere im Bereich der Zacken aneinander an. Somit sind die Einzelzähne zueinander stabilisiert, was eine Robustheit erhöht wobei dennoch aufgrund des Spalts dort die Menge an, insbesondere ferromagnetischen, Material verringert ist.

Beispielsweise ist der Stator lediglich mittels der Einzelzähne gebildet. In einer Alternative hierzu sind beispielsweise in den Spalten jeweils Baukörper angeordnet, sodass eine mechanische Integrität erhöht ist. Insbesondere liegen die Baukörper kraft- und/oder formschlüssig in dem jeweiligen Spalt ein. Vorzugsweise sind dabei die Baukörper aus einem dia- oder paramagnetischen Material erstellt. Somit ist auch weiterhin die Flussbarriere realisiert.

Beispielsweise sind die Einzelzähne aneinander festgeklebt, was eine Stabilität verbessert. Der Verguss besteht hierbei insbesondere aus einem para- oder diamagnetischen Material und ist zweckmäßigerweise ein Kunststoff. Somit ist das Herstellen des Vergusses erleichtert. Aufgrund des Vergusses ist eine Stabilität erhöht. Zudem ist auf diese Weise auch eine elektrische und /oder magnetische Isolierung verbessert.

Beispielsweise ist der Verguss vorhanden, jedoch sind die Spalte frei von dem Verguss. Somit ist ein Materialbedarf verringert. Besonders bevorzugt jedoch sind auch die Spalte mittels des Vergusses befüllt. Somit erfolgt eine vergleichsweise umfangreiche Stabilisierung der Einzelzähne zueinander. Da der Verguss hierbei bereits zum Vergießen der Einzelzähne verwendet wird, ist dieser nicht aus einem ferromagnetischen Material erstellt, weswegen auch bei einer Befüllung der Spalte weiterhin die gewünschten Flussbarriere bereitgestellt ist.

Die elektrische Maschine weist ein Gehäuse mit einer zylindrischen Öffnung auf. Beispielsweise ist hierbei das Gehäuse zylinderförmig oder geeigneterweise topfförmig ausgestaltet. Zweckmäßigerweise sind dabei die gegenüberliegenden Enden des Gehäuses mittels jeweils eines Lagerschilds verschlossen, die an dem Gehäuse angebunden sind. Beispielsweise ist der Außenquerschnitt des Gehäuses ähnlich zu dem Querschnitt der Öffnung, jedoch insbesondere vergrößert. Alternativ hierzu unterscheiden sich diese.

In der zylindrischen Öffnung ist ein Stator angeordnet, der mehrere Einzelzähne umfasst, die jeweils einen radial innenliegenden Zahnkopf und einen radial außenliegenden Zahnfuß aufweisen, zwischen denen ein Zahnkörper angeordnet ist. Die Zahnfüße sind bezüglich einer radialen Symmetrieachse des Zahnkörpers in tangentialer Richtung einseitig verkürzt . Dabei sind die verkürzten Enden der Zahnfüße von jeweils in tangentialer Richtung benachbarten Einzelzähnen unter Ausbildung eines Spalts aufeinander zu gerichtet.

Zweckmäßigerweise ist der etwaige Stator an dem Gehäuse stabilisiert und vorzugsweise dort befestigt. Geeigneterweise ist zwischen dem Stator und dem Gehäuse ein Kraftschluss realisiert, insbesondere in radialer Richtung. Alternativ oder in Kombination hierzu ist der Stator mit der Innenseite der Öffnung verklebt oder vergossen.

Vorzugsweise weist die elektrische Maschine einen Rotor auf, der ebenfalls innerhalb der Öffnung angeordnet ist. Hierbei ist der Rotor vorzugsweise mittels des Stators in Radialrichtung umgeben, wobei zwischen diesen zweckmäßigerweise ein Luftspalt gebildet ist. Geeigneterweise ist der Rotor an dem Gehäuse drehbar gelagert. Hierfür umfasst die elektrische Maschine zweckmäßigerweise zwei Lager, die an den Lagerschilden befestigt sind, mittels derer die Öffnung des Gehäuses an gegenüberliegenden Seiten verschlossen ist. Mittels der Lager wiederum ist insbesondere eine Welle drehbar gelagert, an der der Rotor befestigt ist.

Beispielsweise ist der die Innenseite der Öffnung im Wesentlichen glatt ausgestaltet. Somit ist eine Herstellung erleichtert. Alternativ hierzu sind an der Innenseite der Öffnung radial nach innen ragende Stege vorhanden. Jeweils einer der Stege ist in jeweils einem der Spalte angeordnet. Insbesondere liegen hierbei die dem Spalt zugeordneten Einzelzähne kraftschlüssig an dem jeweiligen Steg an. Somit werden diese Einzelzähne trotz des dazwischen angeordneten Spalts zu einander stabilisiert. Beispielsweise ragen die Stege durch den vollständigen Spalt in Radialrichtung hindurch. Besonders bevorzugt jedoch weisen diese im Vergleich zu den Zahnfüßen eine in Radialrichtung verringerte Ausdehnung auf, sodass insbesondere keine ungünstige Beeinflussung des Magnetfelds erfolgt. Beispielsweise sind die Stege an der Innenseite befestigt, insbesondere verschweißt. Vorzugsweise jedoch sind die Stege einstückig mit dem Gehäuse und werden zum Beispiel mit diesem urgeformt. Somit ist eine Stabilität verbessert.

Das Verfahren dient der Herstellung einer elektrischen Maschine mit einem Gehäuse das eine zylindrische Öffnung aufweist, in der ein Stator angeordnet ist. Der Stator umfasst mehrere Einzelzähne, die jeweils einen radial innenliegenden Zahnkopf und einen radial außenliegenden Zahnfuß aufweisen, zwischen denen ein Zahnkörper angeordnet ist. Die Zahnfüße sind bezüglich einer radialen Symmetrieachse des Zahnkörpers in tangentialer Richtung einseitig verkürzt . Dabei sind die verkürzten Enden der Zahnfüße von jeweils in tangentialer Richtung benachbarten Einzelzähnen unter Ausbildung eines Spalts aufeinander zu gerichtet.

Bei dem Verfahren wird in einem ersten Arbeitsschritt der Stator bereitgestellt, mittels dessen ein Montagestern umgeben ist. Der Montagestern ist dabei insbesondere zylindrisch ausgestaltet und erstreckt sich geeigneterweise entlang der etwaigen Maschinenachse, um die der Stator angeordnet ist. Vorzugsweise ist dabei der Montagestern konzentrisch zur Maschinenachse angeordnet und/oder drehsymmetrisch bezüglich dieser. Der Montagestern liegt an den radial inneren Enden der Zahnköpfe an, beispielsweise vollständig, abschnittsweise oder lediglich punktuell. Zudem greift der Montagestern in Nutöffnungen ein, die zwischen jeweils in tangentialer Richtung benachbarten Zahnköpfen gebildet sind. Der Montagestern weist hierfür zweckmäßigerweise geeignet geformte Finger auf, die insbesondere die Nutöffnungen vollständig ausfüllen. Somit werden die Einzelzähne mittels des Montagesterns zueinander stabilisiert.

Beispielsweise wird dabei zunächst der Stator erstellt und anschließend der Montagestern geeignet positioniert. Alternativ hierzu erfolgt das Anordnen der Einzelzähne, und somit das Erstellen des Stators, an dem Montagestern, der somit auch als Montagehilfe zur Erstellung des Stators dient. Dabei wird mittels des Montagesterns die Position der Einzelzähne vorgegeben, weswegen die Herstellung erleichtert ist. Insbesondere weist dabei jeder Einzelzahn bereits eine elektrische Spule auf, sodass jeder Zahnkörper mit der jeweiligen elektrischen Spule bewickelt ist. Zum Beispiel liegen dabei die elektrischen Spulen jeweils in tangentialer Richtung benachbarter Einzelzähne zumindest abschnittsweise mechanisch direkt aneinander an. Somit ist eine Gesamtmasse der elektrischen Spulen vergrößert.

In einem zweiten Arbeitsschritt wird der Stator mittels des Montagesterns in die zylindrische Öffnung des Gehäuses eingeführt. Hierfür wird insbesondere der Montagestern und der daran gehaltene Stator oberhalb der Öffnung positioniert und in Axialrichtung also insbesondere entlang der Maschinenachse, in das Gehäuse bewegt sowie geeignet positioniert. Ferner wird der Stator dort befestigt. Dies erfolgt beispielsweise mittels Klebens oder Aufschrumpfens. Hierfür wird insbesondere zunächst das Gehäuse erwärmt und/oder der Stator abgekühlt, sodass diese eine veränderte Ausdehnung aufweisen. Nach dem Einführen erfolgt eine Temperaturangleichung, sodass eine kraft- und/oder formschlüssige Anlage des Stators an der Innenseite der Öffnung erfolgt.

Nach dem Befestigen des Stators in der Öffnung wird der Montagestern entfernt. Hierfür wird das Halten des Stators an dem Montagestern beendet, wobei beispielsweise der Montagestern bezüglich des Stators geeignet verdreht und/oder etwaige Halteelemente entfernt werden, mittels derer der Montagestern an dem Stator gehalten ist. Alternativ ist bereits ein Entfernen möglich, da der Stator an dem Gehäuse befestigt ist. So reicht beispielsweise die Befestigung des Stators an dem Gehäuse aus, um die Kraft, mittels derer der Stator an dem Montagestern gehalten ist, zu überwinden. Zusammenfassend dient der Montagestern lediglich als Werkzeug zur Montage des Stators in dem Gehäuse und kann zur Herstellung von weiteren elektrischen Maschinen verwendet werden.

Wegen des Montagesterns ist ein Anordnen der Einzelzähne innerhalb der Öffnung vergleichsweise einfach möglich, nämlich aufgrund des bereits fertig erstellten Stators. Dabei werden die Einzelzähne trotz der vorhandenen Spalte zueinander stabilisiert, und das Einführen des Stators in die Öffnung ist erleichtert. Zusammenfassend ist somit sichergestellt, dass die Spalte bei Einführen in die Öffnung erhalten bleiben, und es ist nicht erforderlich, die Einzelzähne in der vergleichsweisen begrenzten Öffnung geeignet zueinander zu positionieren. Folglich ist eine Montage vereinfacht.

Beispielsweise ist die Innenseite der Öffnung im Wesentlichen glatt ausgebildet, oder das Gehäuse weist die etwaigen Stege auf. Hierbei wird der Stator bezüglich des Gehäuses derart positioniert, dass beim Einführen des Stators die Stege in die Spalte eintauchen. Somit erfolgt eine weitere Stabilisierung.

Zweckmäßigerweise werden die Einzelzähne mit dem Verguss vergossen. Beispielsweise werden vor dem Einführen des Stators in das Gehäuse die Einzelzähne vergossen, oder dies erfolgt erst nach dem Einführen in die Öffnung. Dabei erfolgt beispielsweise die Befestigung des Stators an dem Gehäuse mittels des Vergusses.

Die Erfindung betrifft ferner eine Industrieanlage mit einer derartigen elektrischen Maschine, die zweckmäßigerweise als Elektromotor ausgebildet ist. Dabei umfasst Industrieanlage zweckmäßigerweise einen Umrichter, mittels dessen der Elektromotor bestromt und elektrisch verbunden ist.

Die im Zusammenhang mit dem Stator Maschine ausgeführten Weiterbildungen und Vorteile sind sinngemäß auch auf die elektrische Maschine / das Verfahren / die Industrieanlage sowie untereinander zu übertragen und umgekehrt.

Nachfolgend werden Ausführungsbeispiele der Erfindung anhand einer Zeichnung näher erläutert. Darin zeigen:
- Fig. 1: schematisch eine Industrieanlage, die eine elektrische Maschine umfasst,
- Fig. 2 - 5: schematisch in einer Schnittdarstellung senkrecht zu einer Maschinenachse verschiedene Varianten der elektrischen Maschine,
- Fig. 6: ein Verfahren zur Herstellung der elektrischen Maschine, und
- Fig. 7: schematisch in einer Schnittdarstellung senkrecht zu der Maschinenachse, die elektrischen Maschine während des Verfahrens.

Einander entsprechende Teile sind in allen Figuren mit den gleichen Bezugszeichen versehen.

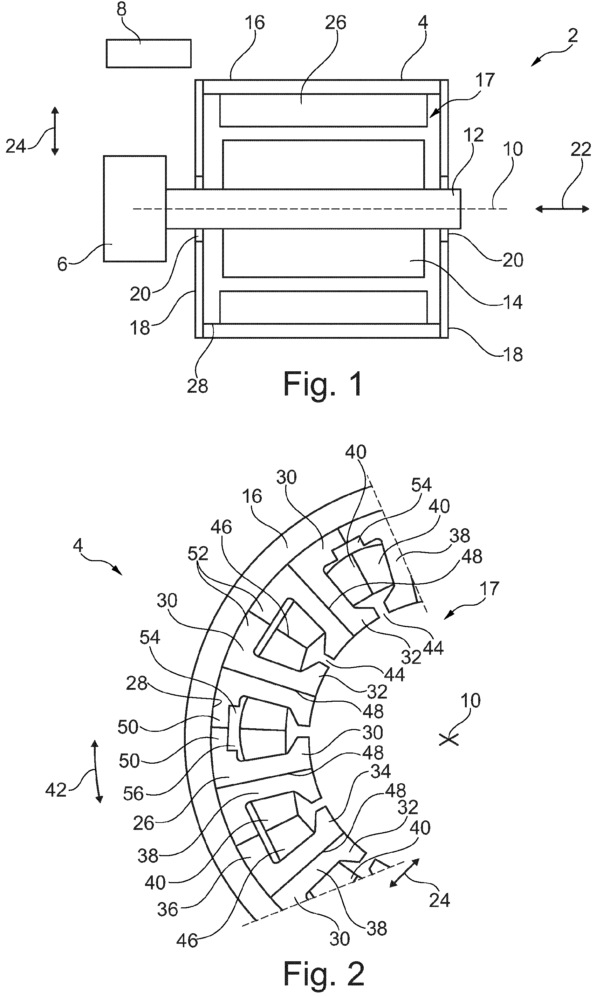

In Figur 1 ist schematisch vereinfacht eine Industrieanlage 2 dargestellt, die eine elektrische Maschine 4 aufweist. Die elektrische Maschine 4 ist als ein bürstenloser Elektromotor ausgebildet, und mittels dessen ist ein Aktor 6 angetrieben, wie zum Beispiel ein Förderband. Die elektrische Maschine 4 ist mittels eines Umrichters 8 bestromt, der elektrisch mit der elektrischen Maschine 4 verbunden ist.

Die elektrische Maschine 4, die in einer Schnittdarstellung entlang einer Maschinenachse 10 dargestellt ist, weist eine auf und konzentrisch zu der Maschinenachse 10 angeordnete Welle 12 auf, die aus einem Stahl erstellt ist. Mit dieser ist der Aktor 6 mechanisch verbunden. An der Welle 12 ist umfangsseitig ein Rotor 14 drehfest befestigt, der mehrere nicht näher dargestellte Permanentmagneten aufweist, die an einem Blechpaket des Rotors 14 befestigt sind.

Der Rotor 14 ist hierbei innerhalb eines hohlzylindrischen Gehäuses 16 angeordnet. Das Gehäuse 16 ist konzentrisch zur Maschinenachse 10 angeordnet und weist eine mittige, zylindrische Öffnung 17 auf, innerhalb derer der Rotor 14 angeordnet ist. Das Gehäuse 16 ist an gegenüberliegenden Seiten mittels jeweils eines Lagerschilds 18 verschlossen, an denen jeweils ein Lager 20 gehalten ist, Mittels dieser ist die Welle 12 drehbar um die Maschinenachse 10 gelagert, die parallel zu einer Axialrichtung 22 ist, die auch als axiale Richtung bezeichnen ist.

In einer Radialrichtung 24, die auch als radiale Richtung bezeichnet ist, nach außen versetzt ist der Rotor 14 von einem hohlzylindrischer Stator 26 umgeben, der an einer Innenseite 28 (Innenwand) der Öffnung 17 angeordnet und dort befestigt ist.

In Figur 2 ist schematisch vereinfacht in einer Schnittdarstellung senkrecht zur Maschinenachse 10 ausschnittsweise die elektrische Maschine 4 dargestellt, wobei der Rotor 14 sowie die Welle 12 nicht gezeigt sind. Der Stator 26 liegt an der glatten Innenseite 28 der Öffnung 17 des Gehäuses 16 umfangsseitig vollständig an und weist mehrere Einzelzähne 30 auf. Die Einzelzähne 30 sind zueinander baugleich und weisen jeweils einen Rumpfzahn 32 auf, der mittels eines jeweiligen Blechpakets gebildet ist. Die einzelnen Bleche der Blechpakete sind dabei in Axialrichtung 22 übereinandergeschichtet und zueinander jeweils gleich, sodass zur Herstellung lediglich ein einziges Stanzwerkzeug erforderlich ist.

Jeder Rumpfzahn 32 weist ein radial innenliegenden Zahnkopf 34 sowie ein radial außen liegenden Zahnfuß 36 auf, der an der Innenseite 28 anliegt. Der Zahnkopf 34 und der Zahnfuß 36 jedes Rumpfzahns 32 sind jeweils mittels eines Zahnkörpers 38 verbunden, der im Wesentlichen quaderförmig ausgestaltet ist, und sich in der jeweiligen Radialrichtung 24 erstreckt. Jeder Zahnkörper 38 ist mittels einer elektrischen Spule 40 bewickelt, die aus einem Lackdraht erstellt sind. Auch diese sind zueinander baugleich, weswegen sämtliche Einzelzähne 30 zueinander baugleich sind.

Die Einzelzähne 30 sind in einer Tangentialrichtung 42, die auch als tangentiale Richtung bezeichnet und anhand der Maschinenachse 10 definiert ist, nebeneinander angeordnet, sodass die hohlzylindrische Form des Stators 26 gebildet ist. Zwischen in der Tangentialrichtung 42 benachbarten Zahnköpfen 34 ist jeweils eine Nutöffnung 44 gebildet, die sich in eine daran in Radialrichtung 24 anschließende Nut 46 öffnet. Diese befinden sich in Tangentialrichtung 42 zwischen benachbarten Zahnkörpern 38 und sind im Wesentlichen vollständig mittels der elektrischen Spulen 40 befüllt. Dabei liegen die in Tangentialrichtung 42 benachbarten elektrische Spulen 40 aneinander an.

Die Zahnköpfen 34 und Zahnkörper 38 jedes Rumpfzahns 32 sind symmetrisch bezüglich einer in der jeweiligen Radialrichtung 24 verlaufenden Symmetrieachse 48 ausgebildet. Anhand der Symmetrieachse 48 ist dabei eine Symmetrieebene definiert, die in Radialrichtung 24 sowie Axialrichtung 22 verläuft. Die Zahnfüße 36 hingegen sind bezüglich der jeweiligen Symmetrieachse 48 unsymmetrisch, da eines der Enden 50 in tangentialer Richtung 42 verkürzt ist. Somit ist dort im Vergleich zu dem in tangentialer Richtung 42 unverkürzten Ende 52 weniger Material des Blechpakets vorhanden. Die verkürzten Enden 50 der jeweils in tangentialer Richtung 42 benachbarten Einzelzähne 30 sind unter Ausbildung eines Spalts 54 aufeinander zu gerichtet. Um dies mit den zueinander baugleichen Einzelzähnen 30 zu realisieren, sind jeweils benachbarte Einzelzähne 30 bezüglichen der jeweiligen Symmetrieachse 48 um 180° gedreht.

Die Spalte 54 sind lediglich auf der radialen Innenseite geöffnet, sodass diese nach Art von Kerben ausgebildet sind, und die verbleibenden Bestandteile der verkürzten Enden 50 der benachbarten Einzelzähne 30 liegen aneinander an. Die unverkürzten Enden 52 der Zahnfüße 36 von jeweils in tangentialer Richtung 42 benachbarten Einzelzähnen 30 liegen dahingegen vollflächig direkt aneinander an.

Zusammenfassend werden bei der elektrischen Maschine 4 die Einzelzähne 30 verwendet, bei denen die elektrische Spulen 40 vergleichsweise viele Wicklungen aufweisen, sodass sämtliche Nuten 46 mittels der elektrischen Spulen 40 befüllt sind. Aufgrund der Spalte 54 sind dabei Flussbarrieren gebildet, sodass das Ausbilden von Oberschwingungen vermieden ist, weswegen ein Wirkungsgrad verbessert ist.

In dem dargestellten Beispiel sind die Einzelzähne 30 mittels eines Vergusses 56, nämlich eines Thermoplasts vergossen, mittels dessen auch die Spalte 54 befüllt sind. Somit ist trotz der Spalte 54 dennoch eine mechanische Integrität des Stators 26 vergleichsweise groß.

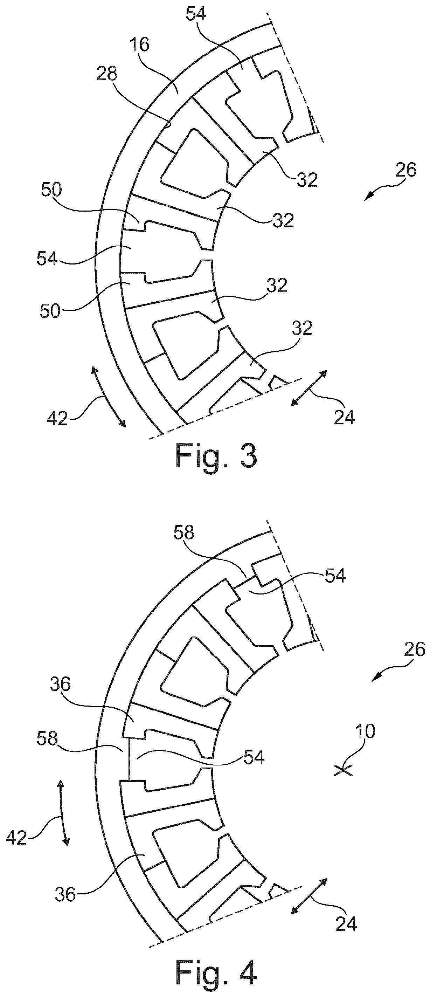

In Figur 3 ist gemäß der Darstellung der Figur 2 eine Alternative des Stators 26 gezeigt, wobei die elektrischen Spulen 40 nicht dargestellt sind. Mit anderen Worten sind von dem Stator 24 lediglich die Rumpfzähne 32 gezeigt. Auch ist der Verguss 56 nicht dargestellt. Im Vergleich zu dem vorhergehenden Beispiel sind die verkürzten Enden 50 derart verkürzt, dass jeder Spalt 54 in radialer Richtung 24 durchgehend ist. Folglich gibt es nunmehr Bestandteile der Innenseite 28 die mit keinem der Zahnfüße 36 überdeckt sind. Infolgedessen ist die Wirkung der Flussbarrieren verbessert. Beispielsweise ist wiederum der Verguss 56 vorhanden, der jedoch nicht gezeigt ist, und mittels dessen auch die Spalte 54 befüllt sind. Somit weist der Stator 26 auch weiterhin eine vergleichsweise hohe mechanische Integrität auf. Alternativ hierzu ist der Verguss 56 nicht vorhanden, wie auch bei einer nicht näher dargestellten Variante des in Figur 2 gezeigten Stators 26. In diesem Fall sind die Einzelzähne 30 beispielsweise mittels eines Klebers an der Innenseite 28 befestigt, oder diese werden bezüglich des Gehäuses 16 aufgrund eines des Kraftschlusses gehalten.

In Figur 4 ist eine Weiterbildung der in Figur 3 ist gezeigten Variante gezeigt. Im Vergleich zu dort sind an der Innenseite 28 radial nach innenragende Stege 58 angeformt, die in die Spalte 54 hereinragen. Dabei weist jeder der Stege 58 in Radialrichtung 24 im Vergleich zu den Zahnfüße 36 eine verringerte Ausdehnung auf. Zwischen den aufeinander zugerichteten verkürzten Enden 50 und dem dazwischen angeordneten Steg 58 ist ein Kraftschluss gebildet, sodass die Einzelzähne 30 zueinander stabilisiert sind.

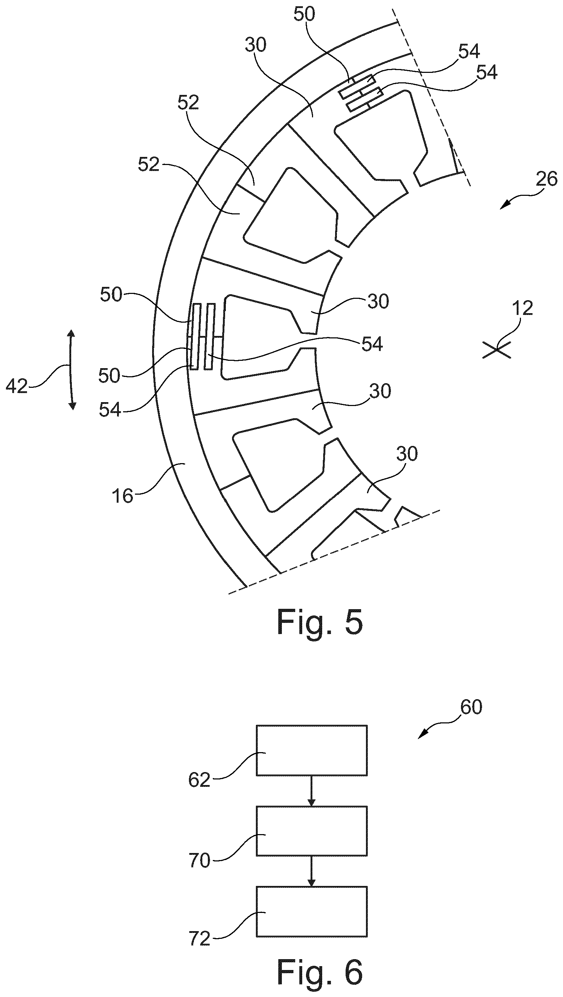

In Figur 5 ist eine weitere Alternative des Stators 26 gezeigt. Bei diesem sind die verkürzten Enden 50 gezahnt ausgebildet, wobei die auf diese Weise gebildeten Zacken in Tangentialrichtung 42 aneinander abgestützt sind. In dem dargestellten Beispiel sind daher nunmehr zwei Spalte 54 mittels der aufeinander zu gerichteten verkürzten Enden 50 gebildet, weswegen eine Montage erleichtert und eine mechanische Integrität erhöht ist. Dabei sind dennoch die Flussbarrieren vorhanden.

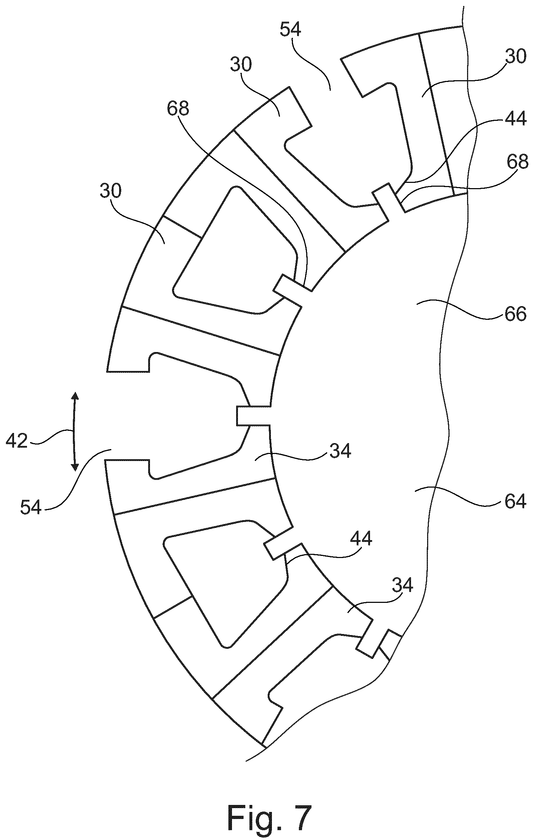

In Figur 6 ist ein Verfahren 60 zur Herstellung der elektrischen Maschine 4 gezeigt. In einem ersten Arbeitsschritt 62 wird der Stator 26 bereitgestellt, mittels dessen ein Montagestern 64 umgeben ist, wie in Figur 7 in einer Schnittdarstellung senkrecht zur Maschinenachse 10 gezeigt, wobei der Stator 26 entsprechend der in Figur 3 oder 4 ausgestalteten Variante ausgebildet ist. Der Montagestern 64 weist einen zylindrischen und auf der Maschinenachse 10 angeordneten Grundkörper 66 auf, an dem sich radial nach außen erstreckende Finger 68 angeformte sind. Diese greifen in die Nutöffnungen 44 ein, wobei die Zahnköpfe 34 an dem Grundkörper 66 endseitig an liegen.

Zur Montage werden die Einzelzähne 30, nämlich die mit der jeweiligen elektrischen Spule 40 bewickelt eine Rumpfzähne 32, einzeln an dem Montagestern 64 angeordnet, wobei auch die Spalte 54 gebildet werden. Dabei ist aufgrund der Stabilisierung mittels des Montagesterns 64 eine Bewegung der Einzelzähne 30 zueinander unterbunden. Zusammenfassend wird somit in dem ersten Arbeitsschritt der Stator 26 mittels des Montagesterns 64 gebildet, sodass der Stator 26 bereitgestellt wird, mittels dessen der Montagestern 64 umgeben ist. Dabei liegen die radial inneren Enden der Zahnköpfe 34 an dem Montagestern 64 an, der zudem in die Nutöffnungen 44 eingreift, die zwischen jeweils in tangentialer Richtung 42 benachbarten Zahnköpfen 34 gebildet sind.

In einem sich anschließenden zweiten Arbeitsschritt 70 wird der Stator 26 mittels des Montagesterns 64 in Axialrichtung 22 oberhalb der zylindrischen Öffnung 17 des Gehäuses 16 konzentrisch zur Motorachse 10 positioniert und anschließend in Axialrichtung 22 bewegt, sodass der Stator 26 und der Montagestern 64 in das Gehäuse 16 eingeführt werden. Anschließend werden die Einzelzähne 30 gegebenenfalls mit dem Verguss 56 vergossen, wobei der Verguss 56 bis zur Innenseite 28 geführt wird, sodass der Stator 26 mit der Innenseite 28 verklebt wird. Alternativ oder in Kombination hierzu erfolgt ein zusätzliches Verkleben, oder das Gehäuse 16 wird auf den Stator 26 aufgeschrumpft und auf diese Weise befestigt.

Nach dem Befestigen wird in einem sich anschließenden dritten Arbeitsschritt 72 der Montagestern 64 in Axialrichtung 22 aus dem Gehäuse 16 bewegt und somit entfernt. Im Anschluss hieran werden in dem Verfahren 60 oder einem anderen Verfahren der Rotor 14, die Welle 12 sowie die Lagerschilde 18 und die Lager 20 montiert.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Industrieanlage
- 4: elektrische Maschine
- 6: Aktor
- 8: Umrichter
- 10: Maschinenachse
- 12: Welle
- 14: Rotor
- 16: Gehäuse
- 17: Öffnung
- 18: Lagerschild
- 20: Lager
- 22: Axialrichtung
- 24: Radialrichtung
- 26: Stator
- 28: Innenseite
- 30: Einzelzahn
- 32: Rumpfzahn
- 34: Zahnkopf
- 36: Zahnfuß
- 38: Zahnkörper
- 40: elektrische Spule
- 42: Tangentialrichtung
- 44: Nutöffnung
- 46: Nut
- 48: Symmetrieachse
- 50: verkürztes Ende
- 52: unverkürztes Ende
- 54: Spalt
- 56: Verguss
- 58: Steg
- 60: Verfahren
- 62: erster Arbeitsschritt
- 64: Montagestern
- 66: Grundkörper
- 68: Finger
- 70: zweiter Arbeitsschritt
- 72: dritter Arbeitsschritt

## Patentansprüche

1. Stator (26) für eine elektrische Maschine (4), mit mehreren Einzelzähnen (30), die jeweils einen radial innenliegenden Zahnkopf (34) und einen radial außenliegenden Zahnfuß (36) aufweisen, zwischen denen ein Zahnkörper (38) angeordnet ist, wobei die Zahnfüße (36) bezüglich einer radialen Symmetrieachse (48) des Zahnkörpers (38) in tangentialer Richtung (42) einseitig verkürzt sind, und wobei die verkürzten Enden (50) der Zahnfüße (36) von jeweils in tangentialer Richtung (42) benachbarter Einzelzähnen (30) unter Ausbildung eines Spalts (54) aufeinander zu gerichtet sind.

2. Stator (26) nach Anspruch 1,
**dadurch gekennzeichnet,**
**dass** die unverkürzten Enden (52) der Zahnfüße (36) von jeweils in tangentialer Richtung (42) benachbarter Einzelzähnen (30) direkt aneinander anliegen.

3. Stator (26) nach Anspruch 1 oder 2,
**dadurch gekennzeichnet,**
**dass** alle Einzelzähne (30) zueinander baugleich sind.

4. Stator (26) nach einem der Ansprüche 1 bis 3,
**dadurch gekennzeichnet,**
**dass** jeder Spalt (54) in radialer Richtung (24) durchgehend ausgebildet ist.

5. Stator (26) nach einem der Ansprüche 1 bis 4,
**dadurch gekennzeichnet,**
**dass** die verkürzten Enden (50) gezahnt ausgebildet sind.

6. Stator (26) nach einem der Ansprüche 1 bis 5,
**dadurch gekennzeichnet,**
**dass** die Einzelzähne (30) mittels eines Vergusses (56) vergossen sind.

7. Stator (26) nach Anspruch 6,
**dadurch gekennzeichnet,**
**dass** die Spalte (54) mittels des Vergusses (56) befüllt sind.

8. Elektrische Maschine (4) mit einem Gehäuse (16), das eine zylindrische Öffnung (17) aufweist, in der ein Stator (26) nach einem der Ansprüche 1 bis 7 angeordnet ist.

9. Elektrische Maschine (4) nach Anspruch 8,
**dadurch gekennzeichnet,**
**dass** das Gehäuse (16) an der Innenseite (28) der Öffnung (17) angeordnete und radial nach innen ragende Stege (58) aufweist, die jeweils in einer der Spalten (54) angeordnet sind.

10. Verfahren (60) zur Herstellung einer elektrischen Maschine (4) nach Anspruch 8 oder 9, wobei
- der Stator (26) nach einem der Ansprüche 1 bis 8 bereitgestellt wird, mittels dessen ein Montagestern (64) umgeben ist, der an den radial inneren Enden der Zahnköpfe (34) anliegt und in Nutöffnungen 44 eingreift, die zwischen jeweils in tangentialer Richtung (42) benachbarten Zahnköpfen (34) gebildet sind,
- der Stator (24) mittels des Montagesterns (64) in die zylindrische Öffnung (17) des Gehäuses (16) eingeführt und dort befestigt wird,
- und der Montagestern (64) entfernt wird.
